# EUROPEAN PATENT APPLICATION

(11) **EP 4 411 972 A1**
(43) Date of publication of application: **07.08.2024**
(21) Application number: 23822730.0
(22) Date of filing: 27.03.2023
(51) Int. Cl.: H01M 50/536, H01M 4/134, H01M 4/1395, H01M 4/66, H01M 4/80, H01M 10/0525

(54) **NEGATIVE ELECTRODE SHEET AND PREPARATION METHOD THEREFOR, SECONDARY BATTERY INCLUDING NEGATIVE ELECTRODE SHEET, AND ELECTRIC APPARATUS**

(30) Priority: 17.06.2022 CN 202210688082
(71) Applicant: Contemporary Amperex Technology Co., Limited, Ningde City, Fujian PRC 352100 (CN)
(72) Inventor: WANG, Manman, Ningde, Fujian 352100 (CN); LIU, Feng, Ningde, Fujian 352100 (CN); GE, Xiaoming, Ningde, Fujian 352100 (CN)
(74) Representative: Kraus & Lederer PartGmbB
(86) International application number: PCT/CN2023/084098
(87) International publication number: WO 2023/241159

(57) **Abstract**

This application provides a negative electrode plate and a method for preparing same. In the method, a metal foil is connected to a foamed metal current collector by roll welding, so as to form the negative electrode plate. The metal foil forms a tab of the negative electrode plate, and the foamed metal current collector includes a foamed metal layer of a porosity of 60% to 99%, and optionally 80% to 85%. The method reduces or avoids flying metal chips and cold solder joints, and improves mechanical strength and electrical conductivity of the electrode plate. This application also provides a negative electrode plate prepared by the method, a secondary battery containing the negative electrode plate, and an electrical device.

## Description

### TECHNICAL FIELD

This application relates to the technical field of secondary batteries, and in particular, to a method for preparing a negative electrode plate. Further, this application relates to a negative electrode plate prepared by the method, a secondary battery containing the negative electrode plate, and an electrical device.

### BACKGROUND

In recent years, secondary batteries have been applied wider in many fields, including energy storage power systems such as hydro, thermal, wind, and solar power stations, and other fields such as electric tools, electric bicycles, electric motorcycles, and electric vehicles, military equipment, and aerospace.

At present, among the negative electrode plates of secondary batteries, the negative electrode plate that uses a foamed metal as a current collector has attracted extensive attention. That is because the foamed metal is of a relatively high porosity and a good heat dissipation structure, and facilitates dissipation of heat of a battery and suppresses deposition of lithium on the electrode plate, thereby improving cycle performance and safety performance of the battery and increasing the service life of the battery.

However, due to the relatively high porosity and relatively low mechanical strength of the foamed metal, it is difficult to manufacture the negative electrode plate, the mechanical properties of the negative electrode plate deteriorate, and the conductivity of the negative electrode plate is low. The battery incurs a high self-discharge rate, imbalanced voltage, and other symptoms.

Therefore, a new method for preparing a negative electrode plate needs to be provided, so as to obtain a negative electrode plate that achieves significantly improved mechanical properties and electrical conductivity, and obtain a secondary battery that achieves significantly improved cycle performance.

### SUMMARY

This application is made in view of the above subject matter. An objective of this application is to provide a method for preparing an electrode plate, so as to avoid cold solder joints and flying metal chips, and in turn, improve mechanical properties and conductivity of the electrode plate and improve cycle performance of a secondary battery.

A first aspect of this application provides a method for preparing a negative electrode plate. In the method, a metal foil is connected to a foamed metal current collector by roll welding, so as to form the negative electrode plate. The metal foil forms a tab of the negative electrode plate. The foamed metal current collector of the negative electrode plate includes a foamed metal layer of a porosity of 60% to 99%, and optionally 80% to 85%. Through a roll welding process, the problems such as metal chips, cold solder joints, overpressure, and damage to the current collector are avoided, so that the mechanical strength and electrical conductivity of the electrode plate are improved.

In any embodiment, the roll welding in this application is ultrasonic welding. The operation parameters are as follows: a power density of the welding is 2.0 to 28 W/cm², and optionally 2.5 to 25 W/cm², and further optionally 8 to 12 W/cm². Optionally, a pressure during the welding is 0.1 MPa to 1.0 MPa. Further optionally, an amplitude of a welding head is 10 µm to 50 µm. By precisely controlling the welding parameters, this application reduces or avoids the problems such as flying metal chips, cold solder joints, and over-melting and wrinkling of the foamed metal current collector.

In any embodiment, the preparation method of this application includes the following connection step: roll-welding the metal foil to one end or two opposite ends of the foamed metal current collector along a length direction, where each metal foil overlaps at least a part of the foamed metal current collector and extends beyond the foamed metal current collector; and the at least a part that is overlapping forms a welding region L2, and an exceeding part of the extension forms an excess region L1.

Optionally, along a width direction of the foamed metal current collector, a dimension of the excess region L1 by percentage falls within a range of 2.5% to 12.5%, and a dimension of the welding region L2 by percentage falls within a range of 10% to 15%, based on a width of the foamed metal current collector. Optionally, along the width direction of the foamed metal current collector, a dimension of the excess region L1 is 1 mm to 5 mm, and the dimension of the welding region L2 is 4 mm to 6 mm.

In this way, a current can be concentrated on the tab more conveniently, thereby improving the current transmission efficiency and improving the areal density distribution of the current.

Further, the metal foil may be roll-welded to opposite surfaces of the foamed metal current collector at each end of the current collector along the length direction, and then the metal foils in two opposite excess regions L1 located at a same end are connected together. This further increases the mechanical strength of the electrode plate, improves the areal density distribution of the current, and improves the conductivity of the electrode plate.

In any embodiment, in the method for preparing a negative electrode plate in this application, one end or each of two opposite ends of the foamed metal current collector extending along a length direction includes a compressed section L3, and the compressed section includes a transition region L4 and a flat region L5.

The metal foil is roll-welded to the flat region L5 at one end or two opposite ends of the foamed metal current collector, where each metal foil overlaps at least a part of the flat region and extends beyond the flat region. The at least a part that is overlapping forms a flat welding region L6. An exceeding part of the extension forms a flat excess region L7.

Optionally, along a width direction of the foamed metal current collector, a dimension of the flat welding region L6 by percentage falls within a range of 7.5% to 12.5%, and a dimension of the flat excess region L7 by percentage falls within a range of 2.5% to 24%, based on a width of the foamed metal current collector. Further optionally, along the width direction of the foamed metal current collector, a dimension of the flat welding region L6 is 3 mm to 5 mm, and the dimension of the flat excess region L7 is 1 mm to 6 mm.

In this way, mutual extrusion between the tabs is avoided in a process of winding the electrode plate, thereby further improving the mechanical strength and electrical conductivity of the electrode plate.

Further, the metal foil may be roll-welded to opposite flat regions L5 of the foamed metal current collector at each end of the current collector along the length direction, and then the metal foils in two opposite flat excess regions L7 located at a same end are connected together.

In any embodiment, in the method for preparing a negative electrode plate in this application, a thickness of the tab is 9 µm to 50 µm, and optionally 10 µm to 20 µm; a width of the tab is 6 mm to 9 mm; a length of the tab is 2 mm to 15 mm, and optionally 3 mm to 10 mm. This further improves the areal density distribution of the current, and improves the conductivity of the battery.

In any embodiment, in the method for preparing a negative electrode plate in this application, the foamed metal current collector is a foamed metal layer. A thickness of the foamed metal layer is 10 µm to 1000 µm, and optionally 10 µm to 100 µm. Optionally, the foamed metal layer is formed by at least one of foamed nickel, foamed copper, foamed aluminum, foamed silver, foamed copper-aluminum alloy, or foamed copper-nickel alloy. This facilitates dissipation of heat of the battery and suppresses deposition of lithium on the electrode plate, thereby improving cycle performance and safety performance of the battery.

In any embodiment, in the method for preparing a negative electrode plate in this application, the foamed metal current collector is a composite formed by laminating a foamed metal layer, a metal foil layer, and a foamed metal layer sequentially. A thickness of each of the metal foam layers is 10 µm to 1000 µm, and optionally 10 µm to 100 µm. A thickness of the metal foil layer is 5 µm to 100 µm, and preferably 5 µm to 50 µm. Optionally, the metal foil layer is at least one selected from a copper foil layer, a nickel foil layer, an aluminum foil layer, or a silver foil layer.

A second aspect of this application provides a negative electrode plate. The negative electrode plate includes a tab and a foamed metal current collector. The tab is formed of a metal foil. The foamed metal current collector includes a foamed metal layer of a porosity of 60% to 99%, and optionally 80% to 85%. The metal foil is connected to the foamed metal current collector by roll welding to form the negative electrode plate of this application. The resulting negative electrode plate achieves improved mechanical properties and electrical conductivity.

In any embodiment, in the negative electrode plate of this application, a thickness of the tab is 9 µm to 50 µm, and optionally 10 µm to 20 µm. A thickness of the foamed metal current collector is 10 µm to 1000 µm, and optionally 10 µm to 100 µm. Optionally, a thickness ratio between the tab and the foamed metal current collector is 1: 1 to 1: 10. This further improves the mechanical properties and electrical conductivity of the tab.

In any embodiment, a tensile force of the negative electrode plate of this application is 10 to 20 N, and optionally 11 to 18 N.

In any embodiment, in the negative electrode plate of this application, a weld seam resistance at a joint between the tab and the current collector is 1.0 to 1.8 mQ, and optionally 1.1 to 1.5 mS2.

In any embodiment, the negative electrode plate of this application is prepared by the preparation method according to the first aspect of this application.

A third aspect of this application provides a secondary battery. The secondary battery includes a negative electrode plate prepared by the preparation method according to the first aspect of this application, or the negative electrode plate according to the second aspect of this application.

A fourth aspect of this application provides an electrical device. The electrical device includes the secondary battery according to the third aspect of this application.

This application achieves at least the following beneficial effects:

The method for preparing a negative electrode plate through a roll welding process according to this application avoids generation of flying metal chips and cold solder joints, avoids the problems such as over-melting and crushing of the foamed metal current collector, and improves the mechanical properties and electrical conductivity of the negative electrode plate. Correspondingly, the negative electrode plate according to this application exhibits good mechanical properties and electrical conductivity, and the secondary battery and electrical device assembled from the negative electrode plate of this application or the negative electrode plate prepared by the preparation method of this application exhibit good cycle performance.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural top view of a part of a negative electrode plate according to an embodiment of this application;
FIG. 2 is a cross-sectional schematic view of a negative electrode plate shown in FIG. 1 according to an embodiment of this application;
FIG. 3-1 is a partial cross-sectional schematic view of an electrode plate obtained by welding a metal foil to a foamed metal, and FIG. 3-2 is a partial cross-sectional schematic view of an electrode plate obtained by connecting metal foils in an excess region shown in FIG. 3-1;
FIG. 4-1 is a schematic diagram of a negative electrode plate according to another embodiment of this application, and FIG. 4-2 is a close-up view of a partial cross-section shown in FIG. 4-1;
FIG. 5 is a schematic structural top view of a part of a negative electrode plate according to another embodiment of this application;
FIG. 6 is a schematic diagram of a secondary battery according to an embodiment of this application;
FIG. 7 is an exploded view of the secondary battery shown in FIG. 6 according to an embodiment of this application; and
FIG. 8 is a schematic diagram of an electrical device according to an embodiment of this application.

The drawings are not drawn to scale.

List of reference numerals: 1: foamed metal current collector; 2: metal foil; L1: excess region; L2: welding region; 3: ultrasonic welding head; L3: compressed section; L4: transition region; L5: flat region; L6: flat welding region; L7: flat excess region; 5: secondary battery; 51: housing; 52: electrode assembly; 53: top cap assembly.

### DETAILED DESCRIPTION OF EMBODIMENTS

The following discloses and describes in detail a negative electrode plate, a method for preparing same, a positive electrode plate, a secondary battery, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 6. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Currently, in a preparation process of an electrode plate of a battery, a metal foil is connected to a metallic current collector typically by bonding with a conductive adhesive or by laser welding. In a case of bonding with a conductive adhesive, the junction is a three-layer structure containing the metallic current collector, the conductive adhesive, and the metal foil. The material and conductivity of the conductive adhesive are different from those of the metallic current collector. Therefore, the compatibility and conductivity of the junction are low. In contrast, the laser welding implements the fusion between the metallic current collector and the metal foil under the action of laser, thereby overcoming the disadvantages of the conductive adhesive bonding, but incurring the following problems: first, the laser welding produces flying metal chips that adhere to the surface of the current collector, and consequently, mutual friction and scratches occur during a winding operation, thereby reducing electrochemical performance of the battery; second, the heat generated during welding is unduly high, and the current collector is over-melted, and consequently, the current collector is damaged, and the production efficiency and product quality of the electrode plate are relatively low. Such problems are particularly conspicuous during the preparation of an electrode plate that uses a foamed metal as a current collector. That is mainly because the porosity of the foamed metal is high, and the mechanical properties, and especially mechanical strength, of the foamed metal are relatively low. The foamed metal is more prone to be affected or even damaged.

Unexpectedly, the inventor finds that the roll welding process can implement connection between a high-porosity foamed metal current collector and a metal foil without impairing the mechanical properties of the foamed metal current collector. The mechanical strength and electrical conductivity of the formed electrode plate are significantly improved. A secondary battery that uses the electrode plate as a negative electrode plate achieves significantly improved cycle performance.

### [Method for preparing an electrode plate]

The following describes the present invention in detail with reference to drawings.

A first aspect of this application provides a method for preparing a negative electrode plate. In the method, a metal foil is connected to a foamed metal current collector by roll welding, so as to form the negative electrode plate. The metal foil forms a tab of the negative electrode plate. The foamed metal current collector of the negative electrode plate includes a foamed metal layer of a porosity of 60% to 99%, and optionally 80% to 85%.

In this application, the metal foil serving as a tab is fixedly connected to the foamed metal current collector by roll welding, thereby not only avoiding the problems such as occurrence of metal chips, cold solder joints, overpressure, and damage to the current collector, but also improving the processing efficiency and quality of the electrode plate, reducing manufacturing cost, giving full play to the good performance of the foamed metal current collector, improving the mechanical strength and electrical conductivity of the electrode plate, and in turn, improving the cycle performance of the secondary battery.

In some embodiments, the roll welding is ultrasonic welding. The operation parameters are as follows: a power density of the welding is 2.0 to 28 W/cm², and optionally 2.5 to 25 W/cm², and further optionally 8 to 12 W/cm². Optionally, a pressure during the welding is 0.1 MPa to 1.0 MPa. Further optionally, an amplitude of a welding head is 10 µm to 50 µm.

The instruments used in the operation include an ultrasonic metal roll-welding machine (such as Ger-Sonic GS-G20PB-3000) with a power of 10 W to 100 W; the pressure is 0.1 MPa to 1.0 MPa; the transducer amplitude is 10 µm to 50 µm; the roll-welding speed is 0.5 to 20 m/min; and the ultrasonic frequency is 15 kHz to 40 kHz.

Power density means the power applied per square centimeter of welding area.

By precisely controlling the parameters of ultrasonic welding, this application avoids occurrence of metal chips and cold solder joints during welding, and avoids the problems such as over-melting and wrinkling of the foamed metal current collector. Controlling the welding power and power density to fall within the appropriate range specified above can achieve the purpose of effective welding, and prevent over-melting of the foamed metal current collector caused by large friction between the weldments (the metal foil and the foamed metal current collector). The pressure during the welding falls within the range of 0.1 MPa to 1.0 MPa, thereby preventing the foamed metal current collector from being damaged or even crushed. Controlling the amplitude to fall within the appropriate range specified above improves the welding area and thickness, and helps to achieve the expected welding effect.

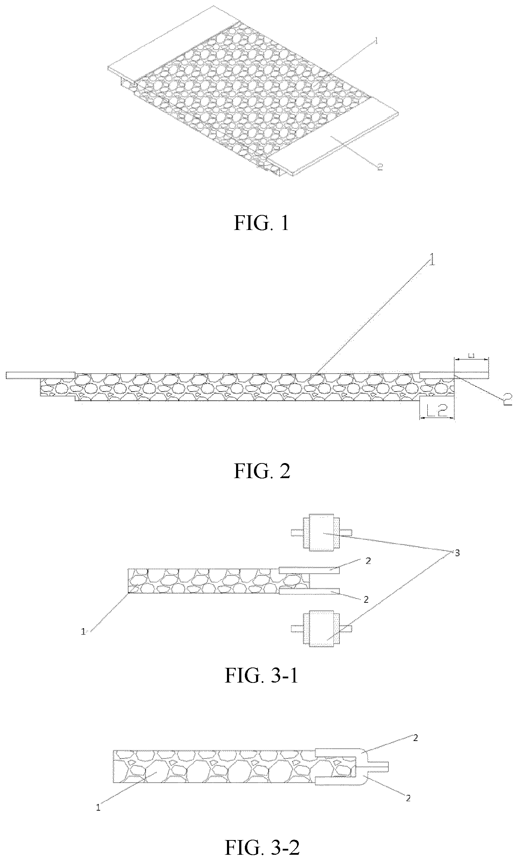

In some embodiments, the method for preparing an electrode plate in this application includes the following connection step: roll-welding the metal foil 2 to one end or two opposite ends (as shown in FIG. 1) of the foamed metal current collector 1 along a length direction, where each metal foil overlaps at least a part of the foamed metal current collector and extends beyond the foamed metal current collector; and the at least a part that is overlapping forms a welding region L2, and an exceeding part of the extension forms an excess region L1. Optionally, as shown in FIG. 2, along a width direction of the foamed metal current collector, a dimension of the excess region L1 by percentage falls within a range of 2.5% to 12.5%, and a dimension of the welding region L2 by percentage falls within a range of 10% to 15%, based on a width of the foamed metal current collector. Further optionally, along the width direction of the foamed metal current collector, a dimension of the excess region L1 is 1 mm to 5 mm, and the dimension of the welding region L2 is 4 mm to 6 mm.

The length of the foamed metal current collector means the dimension of the longest edge, and corresponds to the length direction of the foamed metal current collector. The width of the foamed metal current collector means the dimension of the second longest edge, and corresponds to the width direction of the foamed metal current collector. Therefore, the "welding along the length direction" means welding along a direction of the longest edge of the foamed metal current collector.

Through the roll welding, the metal foil fits snugly with the surface of the foamed metal current collector, thereby improving the welding strength, and making the current concentrated on the tab more conveniently, and in turn, improving the current transmission efficiency and improving the areal density distribution of the current.

Further, in some embodiments, the metal foil is roll-welded to opposite surfaces of the foamed metal current collector at each end of the current collector along the length direction, and then the metal foils in two opposite excess regions L1 located at a same end are connected together.

The metal foils may be connected by ultrasonic welding, laser welding, cold pressure welding, or the like.

As shown in FIG. 3-1, along the length direction of the foamed metal current collector, through the roll-welding ultrasonic welding head 3, the metal foil 2 is welded onto the opposite upper and lower surfaces at the right end of the foamed metal current collector separately, and the metal foil 2 extends beyond the right end of the foamed metal current collector 1 (as shown in FIG. 3-1). Subsequently, the metal foils 2 in the excess region L1 are connected together by roll-welding to form a right-end tab (as shown in FIG. 3-2). Similarly, the metal foils are arranged at the left end of the current collector (not shown in FIG. 3) in the above manner to form a left-end tab. Therefore, the welding region L2 is a three-layer structure region formed a metal foil, a foamed metal current collector, and a metal foil sequentially. The excess region L1 is a two-layer structure region formed by the metal foils on the opposite upper and lower surfaces.

Optionally, along a width direction of the foamed metal current collector, a dimension of the excess region by percentage falls within a range of 2.5% to 12.5%, and a dimension of the welding region by percentage falls within a range of 10% to 15%, based on a width of the foamed metal current collector. Optionally, along the width direction of the foamed metal current collector, a dimension of the excess region is 1 mm to 5 mm, and the dimension of the welding region is 4 mm to 6 mm.

This further increases the mechanical strength of the electrode plate, and at the same time, improves the electrical conductivity of the electrode plate, and also improves the cycle performance of the battery.

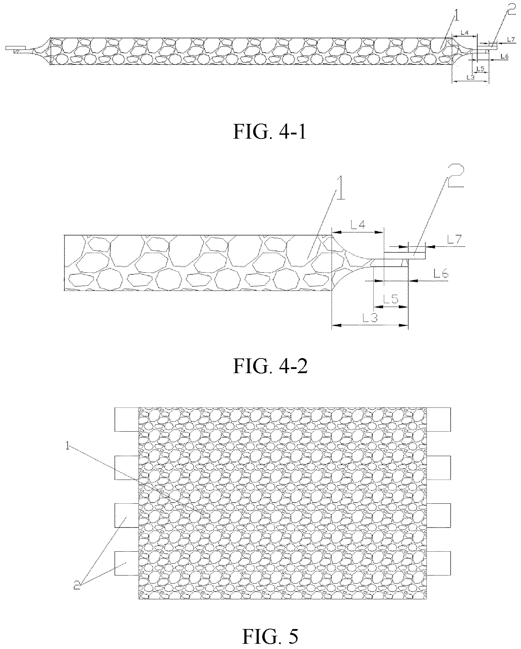

In some embodiments, one end or each of two opposite ends (as shown in FIG. 4-1) of the foamed metal current collector extending along a length direction includes a compressed section L3, and the compressed section includes a transition region L4 and a flat region L5.

The metal foil is roll-welded to the flat region L5 at one end or two opposite ends of the foamed metal current collector, where each metal foil overlaps at least a part of the flat region L5 and extends beyond the flat region L5. The at least a part that is overlapping forms a flat welding region L6. An exceeding part of the extension forms a flat excess region L7. FIG. 4-2 is a close-up view of a structure at an end of a negative electrode plate. In this way, mutual extrusion between the tabs is avoided in a process of winding the electrode plate, thereby further improving the mechanical strength and electrical conductivity of the electrode plate.

Optionally, along a width direction of the foamed metal current collector, a dimension of the flat welding region L6 by percentage falls within a range of 7.5% to 12.5%, and a dimension of the flat excess region L7 by percentage falls within a range of 2.5% to 24%, based on a width of the foamed metal current collector. Further optionally, along the width direction of the foamed metal current collector, a dimension of the flat welding region L6 is 3 mm to 5 mm, and the dimension of the flat excess region L7 is 1 mm to 6 mm.

Each metal foil does not overlap the transition region L4 of the foamed metal current collector at all.

The foamed metal current collector with a compressed section is commercially available or may be obtained by a known compression method.

In a specific embodiment of the present invention, the method for preparing a negative electrode plate of this application includes the following compression step and connection step:

Compression step: Pressing the opposite upper and lower surfaces of the foamed metal at each of two ends of the foamed metal in a mutually facing direction, where the two ends extend along the length direction of the foamed metal; and making a transition from a slope surface to a flat surface gradually during the pressing, where the part of the slope surface forms a transition region, and the part of the flat surface forms a flat region, so as to obtain a foamed metal foil that contains a compressed section at both ends, where the compressed section contains the transition region and the flat region. Along the width direction of the foamed metal, the dimension of the transition region L4 is 0.5 mm to 3 mm, and the dimension of the flat region L5 is 3 mm 7 mm. The dimension of the compressed section L3 is a sum of the dimensions of the transition region L4 and the flat region L5, and falls within a range of 3.5 mm to 10 mm.

Connection step: Using the foamed metal obtained in the above compression step as a current collector, where each of two ends of the foamed metal includes a compressed section that contains a transition region and a flat region; ultrasonically roll-welding the metal foils to the flat regions oppositely on the upper surface of the current collector at the two ends along the length direction of the current collector, and extending the metal foils beyond the flat regions. Along the width direction of the foamed metal, the dimension of the flat welding region L6 is 3 mm to 5 mm, and the dimension of the flat excess region L7 is 1 mm to 6 mm.

Further, in some embodiments, the metal foil is roll-welded to opposite flat regions L5 of the foamed metal current collector at each end of the current collector along the length direction, and then the metal foils in two opposite flat excess regions L7 located at the same end are connected together. In this way, the metal foils connected together form a tab. For example, optionally, the tab is formed by a machining process such as die-cutting.

In this application, roll-welding may be continuous roll-welding or intermittent roll-welding. The continuous roll-welding can quickly weld the metal foil to the current collector, consumes just a short time in the connection step, and is easy to operate. However, a die-cutting step is required after the connection step. To be specific, the metal foils extending beyond the foamed current collector are cut by using a die-cutting machine, so as to form tooth-shaped metal foils arranged at intervals. The metal foils are the tabs of the negative electrode plate, as shown in FIG. 5. By performing the intermittent roll-welding, the subsequent die-cutting step is no longer required, and the tabs are formed in a single pass, as shown in FIG. 5. Subsequently, for the negative electrode plate shown in FIG. 5, the foamed metal current collector is cut along the length direction to obtain two negative electrode plates readily available for preparing a secondary battery, where tabs are arranged at one end of the negative electrode plates.

Optionally, in the roll-welding step of this application, an air-blowing system is disposed to prevent the metal chips or particles generated unexpectedly during the welding from splashing onto the surface of the foamed metal current collector.

In this application, the roll-welding technique may be either seam welding or spot welding. The roll-welding head in use may be selected depending on the specific shape of the weldment. The roll-welding head may be wheel-shaped, circular, stepped, rectangular, cross-shaped, or lattice-shaped.

In this application, in the method for preparing an electrode plate in this application, the thickness of the metal foil is 5 µm to 100 µm, and optionally 5 µm to 50 µm. Optionally, the metal foil is at least one selected from a nickel foil, an aluminum foil, a copper foil, or a silver foil.

In some embodiments, in the method for preparing an electrode plate in this application, the thickness of the tab is 9 µm to 50 µm, and optionally 10 µm to 20 µm. The width of the tab is 6 mm to 9 mm. The length of the tab is 2 mm to 15 mm, and optionally 3 mm to 10 mm. This further improves the areal density distribution of the current, and improves the conductivity of the battery.

The "thickness of the tab" means a thickness of the metal foil in the excess region or the flat excess region after being roll-welded.

The "width of the tab" means the dimension of the metal foil along the width direction of the foamed metal current collector after being roll-welded, and is a sum of the dimension of the excess region L1 and the dimension of the welding region L2 along the width direction of the foamed metal current collector, or, for a foamed metal current collector containing a compressed section, a sum of the dimension of the flat welding region L6 and the dimension of the flat excess region L7.

The "length of the tab" means the dimension of the metal foil along the length direction of the foamed metal current collector after being roll-welded. Alternatively, the tabs may be several tooth-shaped metal foils arranged at intervals. Each individual metal foil possesses a desired length along the length direction of the foamed metal current collector.

In some embodiments, in the method for preparing an electrode plate in this application, the foamed metal current collector is a foamed metal layer. The thickness of the foamed metal layer is 10 µm to 1000 µm, and optionally 10 µm to 100 µm. Optionally, the foamed metal layer is formed by at least one of foamed nickel, foamed copper, foamed aluminum, foamed silver, foamed copper-aluminum alloy, or foamed copper-nickel alloy. This facilitates dissipation of heat of the battery and suppresses deposition of lithium on the electrode plate, thereby improving cycle performance and safety performance of the battery, and prolonging the service life of the battery.

In some embodiments, in the method for preparing an electrode plate in this application, the foamed metal current collector is a composite formed by laminating a foamed metal layer, a metal foil layer, and a foamed metal layer sequentially. The thickness of each of the metal foam layers is 10 µm to 1000 µm, and optionally 10 µm to 100 µm. The thickness of the metal foil layer is 5 µm to 100 µm, and preferably 5 µm to 50 µm.

Optionally, the metal foil layer is at least one selected from a copper foil layer, a nickel foil layer, an aluminum foil layer, or a silver foil layer.

A second aspect of this application provides a negative electrode plate. The negative electrode plate includes a tab and a foamed metal current collector. The tab is formed of a metal foil. The foamed metal current collector includes a foamed metal layer of a porosity of 60% to 99%, and optionally 80% to 85%. The metal foil is connected to the foamed metal current collector by roll welding to form the negative electrode plate of this application. The resulting negative electrode plate achieves improved mechanical properties and electrical conductivity.

In some embodiments, in the negative electrode plate of this application, the thickness of the tab is 9 µm to 50 µm, and optionally 10 µm to 20 µm. The thickness of the foamed metal current collector is 10 µm to 1000 µm, and optionally 10 µm to 100 µm. Optionally, a thickness ratio between the tab and the foamed metal current collector is 1: 1 to 1: 10. This further improves the mechanical properties and electrical conductivity of the tab.

A tensile force of the negative electrode plate of this application is 10 to 20 N, and optionally 11 to 18 N. In contrast to the negative electrode plate prepared by conventional connection such as conductive adhesive bonding or laser welding in the prior art, the tensile force of the negative electrode plate of this application is improved significantly.

In this application, a method for testing the tensile force of the negative electrode plate is as follows: using a tensile tester to measure the tensile force, fixing one end of the foamed metal current collector of the negative electrode plate to a jig (with the tabs disconnected), stretching the tab at the opposite end (at a speed of 10 mm/min to 50 mm/min), and measuring the tensile force upon breakage of the tab. For example, a WDS100 electronic universal material testing machine is used as a tensile tester.

In the negative electrode plate of this application, a weld seam resistance at a joint between the tab and the current collector is 1.0 to 1.8 mQ, and optionally 1.1 to 1.5 mQ. In contrast to the negative electrode plate prepared by conventional connection such as conductive adhesive bonding or laser welding in the prior art, the weld seam resistance of the negative electrode plate of this application is reduced significantly.

In this application, a method for testing the weld seam resistance is as follows: using a resistance tester to measure the electrode plate, and letting a positive gripper and a negative gripper clamp the tab end and the current collector end of the electrode plate respectively (with the tabs disconnected), where the clamping position is close to the weld seam (the junction between the tab and the current collector), so as to measure the resistance at the joint between the tab and the current collector. For example, a handheld three-phase DC resistance tester may be used as the resistance tester.

In some embodiments, the negative electrode plate of this application is prepared by the method for preparing a negative electrode plate according to the first aspect of this application.

A thickness ratio between the tab and the foamed metal current collector in the negative electrode plate is 1: 1 to 1: 10. The tensile force of the negative electrode plate is 10 to 20 N, and optionally 11 to 18 N. The weld seam resistance at the joint between the tab and the current collector in the negative electrode plate is 1.0 to 1.8 mQ, and optionally 1.1 to 1.5 mS2.

Optionally, the negative electrode plate of the present invention further includes a negative electrode film layer disposed on at least one surface of the foamed metal current collector. The negative electrode film layer includes a negative active material.

As an example, the foamed metal current collector includes two surfaces opposite to each other in a thickness direction of the negative current collector. The negative electrode film layer is disposed on either or both of the two opposite surfaces of the foamed metal current collector.

In some embodiments, the negative active material may be a negative active material well known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, tin-oxygen compound, or tin alloy. However, this application is not limited to such materials, and other conventional materials usable as a negative active material of a battery may be used instead. One of the negative active materials may be used alone, or at least two thereof may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, a method for preparing a negative electrode plate containing a negative electrode film layer includes: a compression step, a coating step, a welding step, and a die-cutting step.

In the steps above, the coating step includes: dispersing the constituents of the negative electrode film layer such as a negative active material, a conductive agent, a binder, and any other constituents in a solvent (such as deionized water) to form a negative electrode slurry, coating a foamed metal current collector with the negative electrode slurry, and performing steps such as oven-drying and cold-pressing to obtain a foamed metal current collector containing a negative electrode film layer.

The compression step, the welding step, and the die-cutting step are as described in this application. Understandably, the negative electrode plate of this application is not only applicable to a secondary battery, but also applicable to any other batteries, battery modules, battery packs, and electrical devices.

### Secondary battery

The following describes a secondary battery and an electrical device of this application.

In an embodiment of this application, a secondary battery is provided. The secondary battery includes a negative electrode plate prepared by the preparation method according to the first aspect of this application, or the negative electrode plate according to the second aspect of this application.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

In the secondary battery of this application, the positive electrode plate may be the following commonly used positive electrode plate or a positive electrode plate prepared by the following general preparation method.

The positive electrode plate includes a positive current collector and a positive film disposed on at least one surface of the positive current collector.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Electrolyte]

The electrolyte serves to conduct ions between the positive electrode plate and the negative electrode plate. The type of the electrolyte is not particularly limited in this application, and may be selected as required. For example, the electrolyte may be at least one selected from a solid-state electrolyte or a liquid-state electrolyte (that is, electrolyte solution).

In some embodiments, the electrolyte is an electrolyte solution. The electrolyte solution includes an electrolyte salt and a solvent.

In some embodiments, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP).

In some embodiments, the solvent may be one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the electrolyte solution further optionally includes an additive. For example, the additive may include a negative film-forming additive, a positive film-forming additive, and additives that can improve some performance of the battery, for example, an additive that improves overcharge performance of the battery, an additive that improves high-temperature performance of the battery, and an additive that improves low-temperature performance of the battery, and the like.

### [Separator]

In some embodiments, the secondary battery further includes a separator. The separator is disposed between the positive electrode plate and the negative electrode plate to serve an isolation purpose. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

### [Outer package]

In some embodiments, the secondary battery may include an outer package configured to package the positive electrode plate, the negative electrode plate, and the electrolyte. As an example, the positive electrode plate, the negative electrode plate, and the separator may be stacked or wound to form a stacked-type battery cell or a jelly-roll battery cell. The battery cell is packaged in the outer package. The electrolyte may be an electrolyte solution, and the electrolyte solution infiltrates in the battery cell. The number of battery cells in a secondary battery may be one or more, and may be adjusted as required.

In an embodiment, this application provides an electrode assembly. In some embodiments, the positive electrode plate, the negative electrode plate, and the separator may be made into an electrode assembly by winding or stacking. The outer package may be configured to package the electrode assembly and the electrolyte.

In some embodiments, the outer package of the secondary battery may be a soft package such as a pouch-type soft package. The material of the soft package may be plastic such as one or more of polypropylene (PP), polybutylene terephthalate (PBT), or polybutylene succinate (PBS). In some embodiments, the outer package of the secondary battery may be a hard shell such as a hard plastic shell, an aluminum shell, a steel shell, or the like.

### Method for preparing a secondary battery

In an embodiment, this application provides a method for preparing a secondary battery. The secondary battery includes the negative electrode plate disclosed in this application, or a negative electrode plate prepared by the method disclosed in this application.

The method for preparing a secondary battery may further include a step of assembling the negative electrode plate of this application, the positive electrode plate, and the electrolyte to form a secondary battery. In some embodiments, the positive electrode plate, separator, and negative electrode plate may be wound or stacked sequentially in such a way that the separator is located between the positive electrode plate and the negative electrode plate to serve a function of separation, so as to obtain a cell. The cell is put into an outer package, and then filled with an electrolyte solution, and then the package is sealed to obtain a secondary battery.

In some embodiments, the method for preparing a secondary battery includes a step of preparing a negative electrode plate based on the method disclosed in this application.

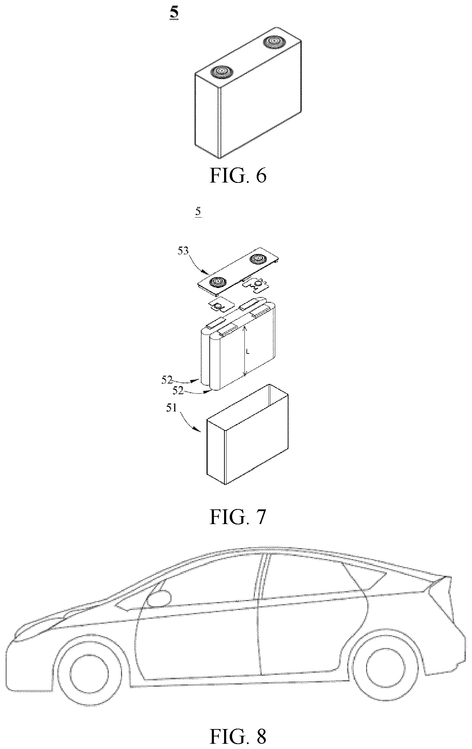

The shape of the secondary battery is not particularly limited in this application, and may be cylindrical, prismatic or any other shape. FIG. 6 shows a prismatic secondary battery 5 as an example.

In some embodiments, referring to FIG. 7, the outer package may include a housing 51 and a cap plate 53. The housing 51 may include a bottom plate and a side plate connected to the bottom plate. The bottom plate and the side plate close in to form an accommodation cavity. An opening that communicates with the accommodation cavity is created on the housing 51. The cap plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

FIG. 8 shows an electrical device as an example. The device may be battery electric vehicle, a hybrid electric vehicle, a plug-in hybrid electric vehicle, or the like.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying the manufacturer is a conventional product that is generally used in this field or commercially available in the market. Unless otherwise specified herein, the content of each ingredient or component in the embodiments of this application is a fraction by mass containing no crystal water. The following describes this application in detail with reference to embodiments, and the description is unrestrictive.

Sources of raw materials involved in the embodiments of this application are as follows:

Foamed copper foil: purchased from Wuzhou HGP Advanced Materials Co., Ltd., with the following specifications: length 80 mm, width 40 mm, thickness 20 µm, and the porosities in five embodiments being 90%, 60%, 80%, 85%, and 99%, respectively.

Copper metal foil: purchased from Beijing Focus Evonik Technology Co., Ltd., with the following specifications: length 80 mm, width 8 mm, and thickness 10 µm.

### Embodiment 1

### Preparing a lithium secondary battery

### [Preparing a positive electrode plate]

Mixing LiFePO₄ as a positive active material, carbon black as a conductive agent, and polyvinylidene difluoride (PVDF) as a binder at a mass ratio of 97: 0.5: 2.5, adding a solvent N-methyl-pyrrolidone (NMP), stirring with a vacuum mixer to obtain a positive electrode slurry; coating a 10 µm-thick positive current collector aluminum foil with the positive electrode slurry evenly, with a coating weight of 0.360 g/1540 mm²; air-drying the aluminum foil at a room temperature, and moving it into a 120 °C oven for drying for 1 hour, and then performing cold-pressing and slitting to obtain a positive electrode plate.

### [Preparing a negative electrode plate]

Connection step: Taking a foamed copper foil (porosity 90%) as a current collector, and performing an ultrasonic roll-welding process by using a Ger-Sonic GS-G20PB-3000 ultrasonic metal roll-welding machine purchased from Ger-Sonic (Changzhou) Welding Technology Co., Ltd., where the welding head area is 20 mm × 20 mm, the power is 40 W, the amplitude is 25 µm, the pressure is 0.25 MPa, the roll-welding speed is 10 m/min; and welding the metallic copper foil to two opposite ends of the foamed copper foil current collector along the length direction, and extending the copper foil beyond the current collector. The metallic copper foils are located at both ends of the upper surface of the foamed copper foil current collector, as shown in FIG. 2. The excess region L1 is 3 mm, and the welding region L2 is 5 mm.

Die-cutting step: Cutting the metallic copper foil in the excess region with a die-cutter to obtain tooth-shaped tabs shown in FIG. 5, and then cutting the foamed metal current collector along the length direction to obtain two negative electrode plates of identical dimensions, with tabs arranged at one end, that is, the negative electrode plate for use in this embodiment.

The tab is 8 mm in length, 8 mm in width, and 10 µm in thickness.

### [Electrolyte solution]

Using a methoxymethane (Methoxymethane, DME) solution with a lithium bis(fluorosulfonyl)imide (LiFSI) salt at a concentration of 1 mol/L as an electrolyte solution.

### [Separator]

Using a 9 µm-thick polypropylene (PP) film as a separator.

### [Preparing a lithium secondary battery]

Preparing the battery in an argon atmosphere glovebox in which the water content (H₂O) is less than 10 ppm and the oxygen content (O₂) is less than 10 ppm. Stacking the positive electrode plate, the separator, and the negative electrode plate in sequence, letting the separator be located between the positive electrode plate and the negative electrode plate to serve a separation function, winding the stacked structure to obtain a bare cell, placing the bare cell of a 0.59 Ah capacity into an outer package foil, injecting 0.25 gram of the electrolyte solution prepared above into the cell that has been dried, and performing steps such as vacuum packaging, standing, chemical formation, and shaping to obtain an anode-free lithium metal secondary battery. The outer package is a plastic shell of 48 mm (width) × 204 mm (length) × 86 mm (height), the thickness of the shell wall is 1.5 mm, and the filling rate of the battery is 93%.

### Embodiments 2 to 5

The process for preparing a lithium secondary battery in these embodiments is substantially identical to Embodiment 1 except that, in the process of preparing the negative electrode plate, the porosities of the foamed copper foil used as a current collector in the five embodiments are changed to 60%, 80%, 85%, and 99%, respectively.

### Embodiments 6 to 7

The process for preparing a lithium secondary battery in these embodiments is substantially identical to Embodiment 1 except that, in the process of preparing the negative electrode plate, the ultrasonic welding powers in the two embodiments are changed to 10 W and 100 W respectively.

### Embodiment 8

The process for preparing a lithium secondary battery in this embodiment is substantially identical to Embodiment 1 except the following process of preparing a negative electrode plate:

Connection step: Taking a foamed copper foil (porosity 90%) as a current collector, and performing an ultrasonic roll-welding process, where the power is 40 W, the amplitude is 25 µm, the pressure is 0.25 MPa, the roll-welding speed is 10 m/min; and welding the metallic copper foil to the opposite upper and lower surfaces at each of two ends of the foamed copper foil current collector along the length direction, and extending the copper foil beyond the current collector, as shown in FIG. 3-1. Subsequently, connecting two opposite metal foils in the excess region at the same end together by ultrasonic roll-welding (the power is 50 W, the amplitude is 35 µm, the pressure is 0.4 MPa, and the roll-welding speed is 10 m/min), where the excess region is 3 mm, the welding region is 5 mm, as shown in FIG. 3-2.

Die-cutting step: Identical to Embodiment 1.

The tab is 8 mm in length, 8 mm in width, and 10 µm in thickness.

### Embodiment 9

The process for preparing a lithium secondary battery in this embodiment is substantially identical to Embodiment 1 except the following process of preparing a negative electrode plate:

Compression step: Pressing the upper and lower surfaces at a distance of 6 mm from each same end of the foamed copper foil (with a porosity of 90%) among the two ends extending along the width direction, exerting a pressure of 0.5 MPa in a mutually facing direction of the upper and lower surfaces by using a roller press machine, and making a transition from a slope surface to a flat surface gradually during the pressing, so that the part of the slope surface forms a transition region L4, and the part of the flat surface forms a flat region L5, so as to obtain a foamed copper foil that contains a compressed section L3 at both ends, where the compressed section contains the transition region L4 and the flat region L4. Along the width direction of the foamed copper foil, the dimension of the transition region L4 is 1 mm, and the dimension of the flat region L5 is 5 mm.

Connection step: Using the foamed copper foil obtained in the above compression step as a current collector, where each of two ends of the foamed copper foil includes a compressed section that contains a transition region and a flat region; ultrasonically roll-welding the metallic copper foils to the flat regions L5 on the upper surface at the two ends of the current collector along the length direction (during the welding, the power is 40 W, the amplitude is 25 µm, the pressure is 0.25 MPa, and the roll welding speed is 10 m/min), and extending the metallic copper foils beyond the flat regions L5. Along the width direction of the foamed copper foil, the dimension of the flat welding region L6 is 4 mm, and the dimension of the flat excess region L7 is 4 mm, as shown in FIG. 4-1 and FIG. 4-2.

Die-cutting step: Cutting the metallic copper foil in the flat excess region with a die-cutter to obtain tooth-shaped tabs shown in FIG. 5, and then cutting the foamed metal current collector along the length direction to obtain two negative electrode plates of identical dimensions, with tabs arranged at one end, that is, the negative electrode plate for use in this embodiment.

The tab is 8 mm in length, 8 mm in width, and 10 µm in thickness.

### Embodiment 10

The process for preparing a lithium secondary battery in this embodiment is substantially identical to Embodiment 9 except the following process of preparing a negative electrode plate:
Compression step: Identical to Embodiment 9.
Connection step: Using the foamed copper foil obtained in the above compression step as a current collector, where each of two ends of the foamed copper foil includes a compressed section that contains a transition region and a flat region; ultrasonically roll-welding the metallic copper foils to the two opposite flat regions L5 at each end of the current collector along the length direction (during the welding, the power is 40 W, the amplitude is 25 µm, the pressure is 0.25 MPa, and the roll welding speed is 10 m/min), and extending the copper foils beyond the flat regions. In other words, welding the metallic copper foils to the flat regions on the opposite upper and lower surfaces at the two ends of the foamed copper foil current collector respectively, and then ultrasonic roll-welding the metallic copper foils in the two opposite flat excess regions at the same end together (during the welding, the power is 50 W, the amplitude is 35 µm, the pressure is 0.4 MPa, and the roll welding speed is 10 m/min). Along the width direction of the foamed copper foil, the dimension of the flat welding region is 4 mm, and the dimension of the flat excess region is 4 mm.
Die-cutting step: Identical to Embodiment 9.

The tab is 8 mm in length, 8 mm in width, and 10 µm in thickness.

### Comparative Embodiment 1

The process for preparing a lithium secondary battery in this comparative embodiments is substantially identical to Embodiment 1 except that, in the connection step in preparing a negative electrode plate, the metallic copper foil is bonded to the foamed copper foil by using epoxy resin as a binder, where the epoxy resin is filled with conductive carbon; and then the bonded foils are moved into an oven to cure at 100 °C for 40 minutes rather than ultrasonic roll-welded.

The tab is 8 mm in length, 8 mm in width, and 10 µm in thickness.

### Comparative Embodiment 2

The process for preparing a lithium secondary battery in this comparative embodiment is substantially identical to Embodiment 1 except that, in the connection step in preparing a negative electrode plate, the metallic copper foil is welded to the foamed copper foil by laser welding rather than ultrasonic roll-welding, so as to produce a negative electrode plate. During the laser welding, the power is 30 W, the wavelength is 1064 nm, the beam spot size is 28 µm, and the pulse frequency is 100 kHz.

### [Performance test]

### 1. Testing the tensile strength of the electrode plate

Measuring a specimen by using a WDS100 electronic universal material testing machine (purchased from Jinan Chenda Testing Machine Manufacturing Co., Ltd.). Fixing one end of the current collector (with the tabs disconnectedi) onto a jig, and stretching the tabs at the opposite ends in a direction of moving away from each other (the stretching speed is 10 mm/min). Measuring the tensile force value displayed upon breakage.

The specimen is the negative electrode plate prepared in the above embodiments and comparative embodiments.

### 2. Testing the weld seam resistance

Measuring the electrode plate by using a handheld three-phase DC resistance tester (purchased from Megger in the United States), and letting a positive gripper and a negative gripper clamp the tab end and the current collector end of the electrode plate respectively (with the tabs disconnected), where the clamping position is close to the weld seam (the junction between the tab and the current collector), so as to measure the weld seam resistance at the joint between the tab and the current collector.

The electrode plate is the negative electrode plate prepared in the above embodiments and comparative embodiments.

### 3. Testing the Coulombic efficiency of the battery

1) Charging the battery specimen in a constant current and constant voltage mode (CC-CV mode) at a room temperature. First, charging the battery at a constant current of 0.1 C until the voltage rises to 4.2 V, and then charging the battery at a constant voltage until the current drops to 0.02 C to fully charge the battery.
2) Subsequently, discharging the battery at a constant current of 0.1 C until the voltage reaches 3.5 V
3) Repeating the above charge and discharge operations to complete 200 cycles.
4) Calculating and recording the Coulombic efficiency at the 200^{th} cycle: coulombic efficiency = 200^{th}-cycle discharge capacity/charge capacity × 100%. The results are shown in the following table. The specimen is the electrode plate prepared in the above embodiments and comparative embodiments.

The battery specimen is the lithium secondary battery prepared in the above embodiments and comparative embodiments.

**Table 1 Impact of process and parameters of preparing a negative electrode plate on performance of the electrode plate and battery**

| Embodiment | Preparation of negative electrode plate | | | | | Performance of negative electrode plate | | Battery performance |
|---|---|---|---|---|---|---|---|---|
| | Porosity of foamed metal | Compression step | Connection step | | | Tensile force (N) | Weld seam resistance (mΩ) | Coulombic efficiency (%) |
| | | | Technique | Power density (W/cm²) | Region to be connected | | | |
| 1 | 90 | No | Roll welding | 10 | Two ends of upper surface | 17 | 1.129 | 99.2 |
| 2 | 60 | No | Roll welding | 10 | Two ends of upper surface | 16 | 1.157 | 99.0 |
| 3 | 80 | No | Roll welding | 10 | Two ends of upper surface | 15 | 1.210 | 99.1 |
| 4 | 85 | No | Roll welding | 10 | Two ends of upper surface | 15 | 1.357 | 98.7 |
| 5 | 99 | No | Roll welding | 10 | Two ends of upper surface | 14 | 1.265 | 98.8 |
| 6 | 90 | No | Roll welding | 2.5 | Two ends of upper surface | 11 | 1.253 | 98.6 |
| 7 | 90 | No | Roll welding | 25 | Two ends of upper surface | 12 | 1.220 | 98.2 |
| 8 | 90 | No | Roll welding | 10 | Two ends of upper and lower surfaces | 18 | 1.494 | 98.1 |
| 9 | 90 | Yes | Roll welding | 10 | Two ends of upper surface | 13 | 1.245 | 98.5 |
| 10 | 90 | Yes | Roll welding | 10 | Two ends of upper and lower surfaces | 16 | 1.341 | 98.4 |
| Comparative Embodiment 1 | 90 | No | Bonding | / | Two ends of upper surface | 9 | 5.825 | 96.4 |
| Comparative Embodiment 2 | 90 | No | Laser welding | Power 30 W | Two ends of upper surface | 8 | 4.114 | 96.1 |

In contrast to Comparative Embodiments 1 and 2, the tensile strength of the negative electrode plate formed by roll welding in embodiments of the present invention is increased significantly, the weld seam resistance is reduced significantly, and the lithium secondary battery prepared from the negative electrode plate is significantly improved in terms of Coulombic efficiency and cycle performance.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A method for preparing a negative electrode plate, wherein a metal foil is connected to a foamed metal current collector by roll welding, so as to form the negative electrode plate, wherein the metal foil forms a tab of the negative electrode plate, and the foamed metal current collector comprises a foamed metal layer of a porosity of 60% to 99%, and optionally 80% to 85%.

2. The method according to claim 1, wherein the roll welding is ultrasonic welding, a power density of the welding is 2.0 to 28 W/cm², and optionally 2.5 to 25 W/cm², and further optionally 8 to 12 W/cm²; optionally, a pressure during the welding is 0.1 MPa to 1.0 MPa; and further optionally, an amplitude of a welding head is 10 µm to 50 µm.

3. The method according to claim 1 or 2, wherein the method comprises the following connection step:
roll-welding the metal foil to one end or two opposite ends of the foamed metal current collector along a length direction, wherein each metal foil overlaps at least a part of the foamed metal current collector and extends beyond the foamed metal current collector ; and the at least a part that is overlapping forms a welding region (L2), and an exceeding part of the extension forms an excess region (L1);
optionally, along a width direction of the foamed metal current collector, a dimension of the excess region (L1) by percentage falls within a range of 2.5% to 12.5%, and a dimension of the welding region (L2) by percentage falls within a range of 10% to 15%, based on a width of the foamed metal current collector ; and
further optionally, along the width direction of the foamed metal current collector,, a dimension of the excess region (L1) is 1 mm to 5 mm, and the dimension of the welding region (L2) is 4 mm to 6 mm.

4. The method according to claim 3, wherein the metal foil is roll-welded to opposite surfaces of the foamed metal current collector at each end of the current collector along the length direction, and then the metal foils in two opposite excess regions (L1) located at a same end are connected together.

5. The method according to claim 1 or 2, wherein one end or each of two opposite ends of the foamed metal current collector extending along a length direction comprises a compressed section (L3), and the compressed section comprises a transition region (L4) and a flat region (L5);
the metal foil is roll-welded to the flat region (L5) at one end or two opposite ends of the foamed metal current collector, wherein each metal foil overlaps at least a part of the flat region (L5) and extends beyond the flat region (L5); and the at least a part that is overlapping forms a flat welding region (L6), and an exceeding part of the extension forms a flat excess region (L7);
optionally, along a width direction of the foamed metal current collector, a dimension of the flat welding region (L6) by percentage falls within a range of 7.5% to 12.5%, and a dimension of the flat excess region (L7) by percentage falls within a range of 2.5% to 24%, based on a width of the foamed metal current collector ; and
further optionally, along the width direction of the foamed metal current collector,, a dimension of the flat welding region (L6) is 3 mm to 5 mm, and the dimension of the flat excess region (L7) is 1 mm to 6 mm.

6. The method according to claim 5, wherein the metal foil is roll-welded to opposite flat regions (L5) of the foamed metal current collector at each end of the current collector along the length direction, and then the metal foils in two opposite flat excess regions (L7) located at a same end are connected together.

7. The method according to any one of claims 1 to 6, wherein a thickness of the tab is 9 µm to 50 µm, and optionally 10 µm to 20 µm; a width of the tab is 6 mm to 9 mm; a length of the tab is 2 mm to 15 mm, and optionally 3 mm to 10 mm.

8. The method according to any one of claims 1 to 7, wherein the foamed metal current collector is a foamed metal layer, a thickness of the foamed metal layer is 10 µm to 1000 µm, and optionally 10 µm to 100 µm; optionally, the foamed metal layer is formed by at least one of foamed nickel, foamed copper, foamed aluminum, foamed silver, foamed copper-aluminum alloy, or foamed copper-nickel alloy.

9. The method according to any one of claims 1 to 8, wherein the foamed metal current collector is a composite formed by laminating a foamed metal layer, a metal foil layer, and a foamed metal layer sequentially, wherein a thickness of each of the metal foam layers is 10 µm to 1000 µm, and optionally 10 µm to 100 µm; and a thickness of the metal foil layer is 5 µm to 100 µm, and preferably 5 µm to 50 µm; and
optionally, the metal foil layer is at least one selected from a copper foil layer, a nickel foil layer, an aluminum foil layer, or a silver foil layer.

10. A negative electrode plate, wherein the negative electrode plate comprises a tab and a foamed metal current collector , the tab is formed of a metal foil, and the foamed metal current collector comprises a foamed metal layer of a porosity of 60% to 99%, and optionally 80% to 85%; and the metal foil is connected to the foamed metal current collector by roll welding to form the negative electrode plate.

11. The negative electrode plate according to claim 10, wherein a thickness of the tab is 9 µm to 50 µm, and optionally 10 µm to 20 µm; a thickness of the foamed metal current collector is 10 µm to 1000 µm, and optionally 10 µm to 100 µm; and optionally, a thickness ratio between the tab and the foamed metal current collector is 1: 1 to 1: 10.

12. The negative electrode plate according to claim 10 or 11, **characterized in that** a tensile force of the negative electrode plate is 10 to 20 N, and optionally 11 to 18 N.

13. The negative electrode plate according to any one of claims 10 to 12, wherein a weld seam resistance at a joint between the tab and the current collector is 1.0 to 1.8 mQ, and optionally 1.1 to 1.5 mQ.

14. The negative electrode plate according to any one of claims 10 to 13, wherein the negative electrode plate is prepared by the method according to any one of claims 1 to 9.

15. A secondary battery , comprising a negative electrode plate prepared by the method according to any one of claims 1 to 9, or the negative electrode plate according to any one of claims 10 to 14.

16. An electrical device, comprising the secondary battery according to claim 15.
